**Europäisches Patentamt**

(19) **European Patent Office**

**Office européen des brevets**

(11) Publication number: **0 159 842**
A2

(12) **EUROPEAN PATENT APPLICATION**

(21) Application number: **85302382.8**

(22) Date of filing: **04.04.85**

(51) Int. Cl.⁴: **C 22 B 11/04,** C 22 B 3/00, C 01 G 5/00, C 01 G 7/00, C 01 G 55/00

(30) Priority: **19.04.84 US 601792**
**15.05.84 US 610385**

(43) Date of publication of application: **30.10.85**
**Bulletin 85/44**

(84) Designated Contracting States: **DE FR GB**

(71) Applicant: **ENVIRONMENTAL TECHNOLOGY (U.S.)**
**INC., 1018 28th Street, Orlando Florida (US)**

(72) Inventor: **Luebbe, Ray H., Jr., 165 Lake Destiny Trail,**
**Altamonte Springs Florida (US)**
Inventor: **Wemhoff, Mark, 16 Turtle Hill Road, Stone**
**Island Florida (US)**

(74) Representative: **Evans, David Charles et al, F.J.**
**CLEVELAND & COMPANY 40-43, Chancery Lane,**
**London, WC2A 1JQ (GB)**

(54) **Method of winning precious metals from geological brines.**

㉗ Methods for winning precious and strategic metals from geological brines are disclosed comprising contacting a glassy material with the brine to cause adsorption of the brine onto the glassy material. The metal is then recovered through the action of a stripping agent upon the glassy material. In accordance with a preferred embodiment the adsorption efficiency is increased by treating the glassy material and/or the brine with oxidizing or reducing agents or radiation.

EP 0 159 842 A2

- 1 -

## METHOD OF WINNING PRECIOUS METALS FROM GEOLOGICAL BRINES

### DESCRIPTION

This invention relates to a method of winning precious and strategic metals such as gold, silver, rhodium, palladium, platinum and others from geological brines.

There has been considerable interest in the extraction of precious metals such as gold from geothermal brine of the type contemplated for use in the production of electric power. See, for example, "An Approach to Recover Strategic Metals from Brines", E. Raber, et al., Lawrence Livermore National Laboratory Report , September 16, 1981; "Geothermal Minerals - the Neglected Minerals", J. Barnea, Geothermal Energy , Vol. 7, no. 7, pp. 12-16(1979); "A Cementation Process for Minerals Recovery from Salton Sea Geothermal Brines", A. Maimoni, Lawrence Livermore National Laboratory Report , January 26, 1982, and "Concentration of Heavy Elements from Thermal-Spring Brines By Precipitation and Cementation", H. Bruchertseifer et al., Zhurnl Prikladnoi Khimii , Vol 64, no. 4, pp. 895-898, April 1981.

Another geological brine is that produced by oil and gas fields. The brine of an oil field ranges from 2% to 98% of the fluid produced by the well but most commonly about 50%. This inventor has determined that some oil field brines contain precious metals, e.g., 20 ppb of gold and 30 ppb of platinum. Although the amount of precious metals is small and difficult to detect because of the presence of large amounts of other ions, it is clear that the precious or strategic metals can be present in oil field brine.

In view of the very small amounts of precious metal present in geological brines, economical extraction of the precious or strategic metals in the presence of a large excess of other, less valuable, metals becomes difficult. The methods proposed in the above-described references for recovery of brine metals include chemical precipitation, cementation, ion exchange resins, reducing borane-amine resins such as Amborance [tm] 345 and 355 produced by the Rohm and Hass Company, charcoal adsorption, metallic replacement, chelation-adsorption, electrowinning, and electrolytic deposition. See also U.S. Patent 4,127,989 in the name of Mickelson directed to Recovery of Metals from Brine Through Chemical Precipitation. In view of the very small amounts of precious metals present in most brines, however, the foregoing have not been deemed to be economically feasible.

The effect of certain metal salt concentration on aromatic hydrocarbon solubility in oilfield brines has been reported. See Geochemistry of Oilfield Water , Collins, Elsevier (1975) at page 179.

It is, therefore, an object of this invention to provide an effective and economically feasible method for winning precious metals from geological brines.

In accordance with this object, a preferred embodiment of the invention comprises the steps of contacting an inorganic glassy material with a brine and selectively adsorbing precious metals or their components, complexes or salts from the brine onto the glassy material. A stripping agent may then be applied to the glassy material to strip or remove the precious metal from the glass and preferably to regenerate the glassy material for further adsorption.

In accordance with another importan aspect of the invention, the glassy material may be treated with an adsorption enhancing agent such as a reducing agent.

In a preferred embodiment of the invention,

- 4 -

glassy materials may be employed in a manner so as to maximize surface area. In this connection, it is desirable to utilize glass beads, crushed glass, glass wool or similarly, finely comminated glassy material. Various glassy metal oxides may be utilized including alumina, baria and strontia, as well as conventional glasses such as pyrex, soda glass, lead glass and the like.

In accordance with yet another important aspect of the invention, an oxidizing agent may be added to the brine to enhance adsorption of the metals or metallic species onto the glassy material.

In accordance with a further aspect of the invention, the winning efficiency may be increased by subjecting the glassy material to ionizing radiation.

A preferred group of stripping agents in accordance with the invention comprises strong acids such as aqua regia.

In accordance with another aspect of this invention, the brine may be brought into contact with an organic, hydrophobic, glassy material to effect metal adsorption. In this embodiment, the organic, glassy material is either contacted with stripping agent, pyrolyzed or otherwise treated to liberate the precious or strategic metals.

0159842

- 5 -

In the preferred embodiments of the invention, geological brine such as geothermal brine or oil field brine is brought into contact with glassy material such that the brine contacts the surface of the glassy material such as in a reaction vessel, column or the like. As a result of this contact, precious metals or their compounds, complexes or salts which may be included within the brine are selectively adsorbed onto the glassy material in greater or lesser degree.

The apparatus utilized to extract the metals may take a variety of forms. A commercially practicable apparatus for extracting precious metals from, for example, oil field brine might include a tank of oil field brine, and means for pumping the oil field brine from the tank to a contacting column containing a finely divided glassy material. Material from the base of the column could then be returned to the tank and coupled to a sump pump located within the tank so as to assure circulation of the oil field brine through the glassy material within the column for example, through a multiplicity of cycles over a period of time as required to extract the metals. Alternatively, the brine and glassy material may be contacted batchwise such as by slurrying the two together followed by filtration or the like.

- 6 -

Pluralities of contacting steps such as stagewise or batchwise contacting may be performed. Thus, the brine may be caused to contact several different glassy materials or glassy materials under different conditions of pH temperature or the like so as to maximize recovery of the desired metals.

A variety of glassy materials may be utilized. Since it is preferable to maximize the surface area of the glassy materials, it is preferred to use crushed glass, glass wool, glass beads, other finely comminated glassy materials or the like. Moreover, a variety of glassy materials may be utilized including various glasses such as pyrex, crown, lead, barium and others together with glassy metal oxides such as alumina, baria, strontia and the like and other inorganic, hydrophobic, glassy substances.

While the adsorption of metals onto glass tubing for example, in spectrometric apparatus, has been known (and considered a nuisance) it has never been proposed or known to employ glassy inorganic or organic materials for recovery of precious or strategic metals from geological brines. In view of the substantial value of such metals and the unprecedented ease of their recovery in accordance with the present invention, such recovery would

- 7 -

certainly have been performed were it known to do so.

In accordance with another embodiment of the invention, organic, hydrophobic, glassy materials such as hydrophobic plastics are employed for adsorption of the metal species. Thus plastics having a relatively low water sorptivity such as polysulfones, polycarbonates, halogenated polymers such as $PVF_2$, certain nylons, acrylics, modacrylics and other plastics known to those of ordinary skill in the art as being relatively hydrophobic are preferred.

Such glassy, hydrophobic, organic polymers may be substituted for the inorganic glassy materials in the metal recovery processes heretofore described. In this regard, suitable plastics are best described by what they do rather than by what they are. Thus, any polymer which is viewed by those of ordinary skill in the art to be relatively hydrophobic and which proves to be effective in adsorbing precious or strategic metals from a geologic brine may be so employed.

Although not strictly among the family of glassy materials as commonly denominated, certain clays such as attapulgite may be useful. Such materials comprise special blends of metal oxides such as magnesium, aluminum and silicon oxides. The present definition

- 8 -

of glassy materials is expanded to contemplate such clays.

In accordance with one important aspect of the invention, an oxidising agent is added to the brine to enhance the ability of the metallic species to be adsorbed by the glassy material. The oxidizing agent may be selected from a wide group of materials such as, for example, hypohalogen, cyanide, pseudohalogen, halogen, ozone and many others capable of substantially raising the redox potential of the brine. It is preferred for some applications to keep the redox potential of the brines below about +200mV to avoid adsorption of base elements such as sulfur.

In some instances, it may be desirable to enhance the adsorption characteristics of the glassy material to either augment the adsorption rate, degree or selectivity of adsorption for particular precious or strategic metals. In this connection, it may be desirable to utilise acids and bases as well as reducing agents for contacting the glassy material for this purpose. For example, hydrazine, borohydride, hydride, dithionite, sulfide and many other materials may be utilized to reduce the surface potential of the glassy material.

In accordance with another preferred embodiment,

- 9 -

the brine and/or the glassy material may be irradiated by ultraviolet, x-ray, or other radiation having wavelengths shorter than the visible spectrum to improve the adsorption efficiency. Irradiation is performed at a wavelength, for a time and at an intensity to improve the rate, degree or selectivity of adsorption of one or more metallic species onto the glossy material. Alternatively, passing an electric current through the brine may afford some enhancement of adsorption.

Contacting the brine with aromatic hydrocarbons such as benzenes, xylens, and/or polynuclear aromatic hydrocarbons may lead to improved enhancement of metal adsorption. In this regard certain aromatic oils such as aromatic plasticizers may be useful.

After the metal or metallic species has been adsorbed onto the glassy material, a stripping agent is applied to the glassy material so as to lead to recovery of the metal. The stripping agent is preferably an oxidant such as aqua regia, other strong acids, solutions of pseudohalogen such as cyanogen iodide, ozonated water and the like and other stripping agents which may be used to wash the glassy material to remove the metal.

In order to apply the stripping agent to the

0159842

- 10 -

glassy material, the oxidant may be cycled through the column. In the alternative, the glassy material may be emptied from the column into a container in which the stripping agent is added. The nature of the container will vary depending upon whether a glassy material is washed in an oxidizing liquid alone or also subjected to ultraviolet light, ionizing radiation, heat or other means by which oxidation may be enhanced. Once the glassy material has been regenerated after extraction of the precious metals, the glassy material may often be returned to the column for reuse.

When hydrophobic polymers are employed in the practice of the present invention, alternatives to stripping may be employed if desired to recover metallic species. Thus, the polymer may, optionally be pyrolyzed or burned to provide a metal-containing residue. Heat treatment of other glassy materials may also lead to convenient recovery especially where metallic species or their complexes, compounds or salts, have a convenient vapor pressure.

Specific examples embodying the invention will now be discussed in detail.

Example 1

A 35 cm high chromatography column 2 cm. in

- 11 -

diameter was packed with 4 mm pyrex glass beads. Glass plumbing was provided so that water could be circulated through the column and back to a reservoir by means of a pump. Five gallons of tap water was added to the reservoir. To this was added 2 ml of a solution of 1,000 mg/l $AgNO_3$ (2,000 g), and 5 ml each of solution of 100 mg/l $Au/Cl_2$ and $PtCl_4$ (500 g each). The pump was turned on and the fluid circulated for 12 hours. The beads were removed from the column, washed twice with 50 ml portions of de-ionized water, then boiled in 50 ml of aqua regia. The two water samples and aqua regia were tested for silver, gold and platinum by direct aspiration Atomic Absorption Spectroscopy. The amounts recovered in each wash were:

|  | Ag | Au | Pt |
|---|---|---|---|
| 1st wash water | 40 g | 10 g | 20 g |
| 2nd wash water | 13 g | 10 g | 20 g |
| Aqua regia | 65 g | 12 g | 25 g |

It was concluded that the glass beads adsorbed silver, gold and platinum from the solution and that

- 12 -

the metals could be recovered from the beads through stripping with aqua regia.


Example 2

Example 1 was repeated except that the column was packed with 8 grams of glass wool and the sample water was heated to 50°C. To 5 gallons of tap water was added 20,000 g $AgNO_3$, 500 g $AuCl_2$ and 500 g $PtCl_4$. After stirring, the measured concentration by Atomic Absorption Spectroscopy was (Ag), 1.3 mg/l; (Au), 0.34 mg/l; (Pt), 0.3 mg/l. The pump was turned on and the water run through the glass wool for 16 hours at a rate of 40 litres/hour. Water samples were taken at intervals for analysis by Atomic Absorption Spectroscopy for (Ag), (Au), and (Pt). The results were as follows: (mg/l)

0159842

- 13 -

| Hours | Ag | Au | Pt |
|---|---|---|---|
| 0 | 1.3 | 0.34 | 0.3 |
| 1 | 1.0 | 0.30 | 0.3 |
| 2 | 0.79 | 0.26 | 0.3 |
| 7 | 0.37 | 0.24 | 0.3 |
| 10 | 0.38 | 0.21 | 0.2 |
| 12 | 0.33 | 0.22 | 0.2 |
| 14 | 0.34 | 0.20 | 0.2 |
| 16 | 0.38 | 0.24 | 0.2 |

After 16 hours the glass wool was removed, washed with water, then with 175 ml aqua regia. The following amounts of metals were found to be in the aqua regia by Atomic Absorption Spectroscopy:

Ag, 2625 g; Au, 490 g; Pt, 9800 g.

### Example 3

Example 2 was repeated except that the glass wool was irradiated with a long wavelength (3500) ultraviolet lamp during pumping. A dark deposit was observed in the exposed area. After 16 hours of circulation followed by aqua regia stripping, the amounts of metal stripped from the glass wool were: Ag, 3600 g; Au, 800 g; and Pt, 1700 g.

0159842

- 14 -

Example 4

Example 2 was repeated except that a natural geological brine was used which was known by fire assay to contain platinum group metals. No additional silver, gold or platinum was added.

After 16 hours of circulation, the glass wool was stripped with 150 ml of aqua regia. The aqua regia was analyzed by Inductively Coupled Plasma Emission Spectroscopy (ICP) and was shown to contain 1500 g platinum. After stripping, the glass wool had a residual gray spot which was insoluble in aqua regia. This was analyzed by Proton Induced X-ray Emission (PIXE) and the following elements were identified: Al, 0.8%; Si, 18.2%, Cl, 0.5%; K, 0.212%; Ca, 5.1%; Ti, 692 ppm; V, 14.7 ppm; Cr, 66 ppm; Mn, 58 ppm; Fe, 752 ppm; Ni, 4.2 ppm; Cu, 3.4 ppm; Zn, 42 ppm; Se, 50 ppm; Br, 13 ppm; Sr, 66 ppm; Y, 3.3 ppm; Zr, 81 ppm; Rh, 4.6 ppm; Pd, 5.5 ppm; Tl, 2.6 ppm; Pb, 2.7 ppm. It was concluded that Rhodium, Palladium and other precious and strategic metals adsorbed on the glass wool.

Example 5

Oil field brine is placed in a five gallon container with a hose connected to the top of the

- 15 -

chromotagraphy column of Example 1 containing beads of conventional glass with 4 mm diameters. Using the pump, the brine is circulated through the glass beads for 16 hours at a flow rate of 2.4 litres per minute. The glass beads are then washed with 125 ml of de-ionized water with pH adjusted to 9.5. An oxidant in the form of 5 ml of cyanogen iodide solution is then added to the beads and the de-ionized water. After shaking, the beads, the de-ionized water and the cyanogen iodide solution are allowed to stand together for 45 minutes. With repeated washing utilizing the de-ionized water and cyanogen iodide solution, silver in an amount of 0.03 mg per litre as analyzed by atomic adsorption spectroscopy may be extracted.

Example 6

The same method and apparatus is employed as in Example 5, except that a 100 ml of a 1:1 aqua regia solution is utilized to extract the precious metals from the glassy material. After washing the glassy material with the aqua regia, the aqua regia is boiled down to 10 ml and then diluted to 20 ml. Metals, 0.4 mg per litre of gold, 8 mg per litre of iron, 1 mg per litre of platinum, 0.3 per litre of silver and 0.17 mg

- 16 -

per litre of copper as analyzed by atomic adsorption spectroscopy may be recovered.

Example 7

The method of Example 6 was followed except that the aqua regia was boiled to dryness and the solid residue was analyzed by PIXE. The redox potential of the brine was determined to be -248 mv prior to starting the pump.

The following elements were detected in the residue:

Al, 0.13%; Si, 0.54%; S, 1.47%; Cl, 1.37%; K, 0.14%; Ca, 2.94%; Ti, 169 ppm; Cr, 728 ppm; Mn, 0.019%; Fe, 4.64%; Ni, 538 ppm; Cu, 0.801%; Zn, 0.32%; Ga, 12.1 ppm; Br, 84.4 ppm; Rb, 62.6 ppm; Sr, 0.142%; Ag, 178 ppm; Tl, 0.867%; Pb 946 ppm.

Example 8

The method of Example 7 was followed using another aliquot of the same brine sample except that the brine was irradiated with 2537 ultraviolet irradiation prior to contact with the glass wool. The following elements were detected: Al, 0.233%; Si 0.764%; S, 1.78%; Cl, 5.13%; K, 0.162%; Ca, 2.49%; Ti, 262 ppm; Cr, 495 ppm; Mn, 0.122%; Fe, 6.40%; Ni, 404

0159842

- 17 -

ppm; Cu, 0.271%; Zn, 0.648%; Ga, 36.0 ppm; Br, 44.6 ppm; Rb, 93.3 ppm; Sn, 0.17%; Ag, 186 ppm; Re, 67.8 ppm; Tl, 1.52%; Pb, 0.105%. Comparing these results with those of Example 7 demonstrates the increased deposition of certain metals such as gallium and rhenium upon irradiation of the brine.

0159842

- 18 -

CLAIMS

1. A method for winning a precious metal from a geologcial brine containing said metal or at least one of its compounds, complexes or salts comprising:

contacting an inorganic glassy material with the brine to cause adsorption of the metal or metallic species onto the glassy material; and

stripping the metal or metallic species from the glassy material by contacting the glassy material with a stripping agent.

2. A method as claimed in claim 1 wherein the precious metal is one or more of rhodium, palladium, silver, iridium, platinum and gold.

3. A method as claimed in claim 1 or claim 2 wherein said glassy material comprises at least one material selected from glass beads, glass wool, lead glass, borosilicate glass, barium glass, strontium glass, zinc glass, milk glass, quartz, alumina, boria, strontia and magnesia.

4. A method as claimed in any preceding claim wherein the stripping agent comprises at least one oxidizing agent.

5. A method as claimed in any preceding claim wherein the stripping agent is a strong acid, sulfuric acid, nitric acid, hydrochloric acid and aqua regia.

6. A method as claimed in any preceding claim further comprising treating the glassy material with reducing agent in an amount sufficient to improve the rate or degree of adsorption of the metal or metallic species onto the glassy material.

7. A method as claimed in claim 6 wherein the reducing agent is hydrazine, borohydride, hydride, dithionite or sulfide.

8. A method as claimed in any preceding claim further comprising treating the brine prior to the contacting step with an oxidizing agent in an amount and for a time sufficient to improve the rate or degree of adsorption of the metal or metallic species onto the glassy material.

- 20 -

9.    A method as claimed in claim 8 wherein the oxidizing agent is hypohalite, ozone, halogen, pseudohalogen and oxygen.

10.    A method as claimed in claim 8 or claim 9 wherein the treatment is sufficient to raise the redox potential of the metal or metallic species in the brine, by at least about 500 millivolts.

11.    A method as claimed in any preceding claim wherein the glassy material is exposed to ionizing radiation for a time and at an intensity sufficient to improve the rate or degree of adsorption of metal or metallic species onto the glassy material.

12.    A method as claimed in any preceding claim further comprising exposing the brine to radiation at a wavelength shorter than the visible spectrum for a time and at an intensity sufficient to improve the rate or degree of adsorption of the metal or metallic species onto the glassy material.

13.    A method as claimed in any preceding claim wherein the glassy material is a hydrophobic, organic material with the brine to cause adsorption of the

– 21 –

metals or metallic species onto the glassy material; and

recovering the metal or metallic species from the glassy material.

14. A modification of the method as claimed in claim 13 wherein the stripping step comprises pyrolysis of the glassy material.

15. A method as claimed in claim 13 or claim 14 wherein the organic glassy material is a hydrophobic plastics material.

16. A method as claimed in claim 15 wherein the plastics material is one or more of polysulfones, polycarbonates, halogenated polymers, nylon, acrylics, and modacrylics.